# EUROPEAN PATENT APPLICATION

(11) **EP 2 299 766 A1**
(43) Date of publication of application: **23.03.2011**
(21) Application number: 10172966.3
(22) Date of filing: 16.08.2010
(51) Int. Cl.: H04W 72/08, H04W 36/00

(54) **Method of radio communication, mobile terminal, and radio network control apparatus**

(30) Priority: 03.09.2009 JP 2009204005
(71) Applicant: FUJITSU LIMITED, Kawasaki-shi, Kanagawa 211-8588 (JP)
(72) Inventor: Shinoda, Yusuke, Kawasaki-shi Kanagawa 211-8588 (JP); Sakai, Koji, Kawasaki-shi Kanagawa 211-8588 (JP)
(74) Representative: Wilding, Frances Ward

(57) **Abstract**

A method of radio communication in a radio communication system including a plurality of mobile terminals and a base transceiver station. The method includes establishing radio communication between a first mobile terminal and the base transceiver station by using a first physical channel and a first dedicated channel, wherein a slot of the first physical channel is shared by time-division multiplexing by first and second control information, the first control information being for the first dedicated channel of the first mobile terminal, the second control information being for a second dedicated channel of a second mobile terminal, and switching the first physical channel to a second physical channel on the basis of a first communication quality of the established radio communication, wherein a slot of the second physical channel is dedicated to the first control information.

## Description

### FIELD

The embodiments discussed herein are related to a method of communication, a mobile terminal, and a radio network control apparatus.

### BACKGROUND

In the 3rd Generation Partnership Project (3GPP), standardization of High Speed Downlink Packet Access (HSDPA) is progressing to realize a higher speed, a lower cost, and a shorter delay in Wideband Code Division Multiple Access (W-CDMA), which is an extension of Code Division Multiple Access (CDMA).

HSDPA employs Adaptive Modulation and Coding (AMC) and Hybrid Automatic Repeat Request (HARQ) to increase the speed with which packets are transferred. AMC performs adaptive switching of a modulation method in accordance with radio environments between base transceiver stations and a mobile terminal (also called user equipment), and specifically employs Quadrature Phase Shift Keying (QPSK) and 16-level Quadrature Amplitude Modulation (16 QAM). In HARQ, when an error is detected in data received from a base transceiver station, a mobile terminal transmits a request for retransmission to the base transceiver station, and performs error correction decoding using both the already received data and retransmitted data.

In Release 5 of HSDPA, a dedicated channel is used for communication of control signals at the time of setting up a call, and a dedicated channel accompanying a shared channel is used for mobility control. In other words, improvement in reduction of transmission path delay is realized only for user data, and a dedicated channel is used for control information of layer 3. In addition, there has been a problem of decreased data throughput due to erroneous detection of ACK/NACK signals in HARQ, for example.

Hence, Release 6 includes modifications in which data to which HSDPA is applied is extended so as to cover control data (DCCH), and Preamble and Postamble are respectively added prior to and subsequent to an ACK/NACK signal in HARQ.

Hereinafter, the channel configuration of HSDPA is further described. In Release 5, DTCH (Downlink Traffic channel) that transmits user data on a downlink is mapped to High-Speed Downlink Shared Channel (HS-DSCH), which is a transport channel for each user equipment (UE), and is mapped to HS-PDSCH (High-Speed Physical Downlink Shared Channel), which is a physical channel shared by a plurality of HS-DSCH channels. A downlink control signal is transmitted by using DPCH (called A-DPCH: Associated Dedicated Physical Channel), which is a physical channel dedicated to a mobile terminal of the user, and is a physical channel for control information, accompanying a physical channel for data. In this manner, user data and control information are transmitted using respective physical channels, where a base transceiver station transmits traffic data using HS-PDSCH and transmits data including control information such as transmission power control information and the like using A-DPCH.

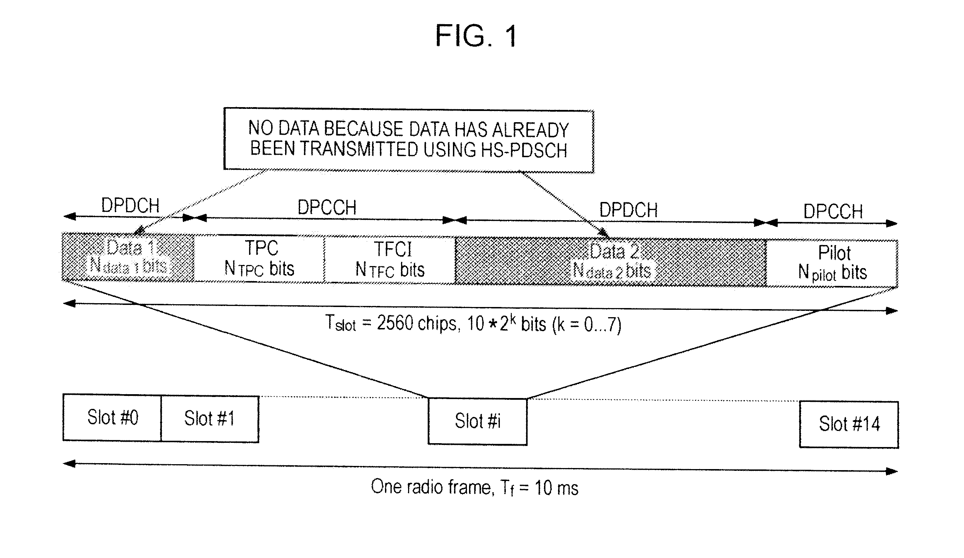

FIG. 1 illustrates the frame configuration of downlink A-DPCH. Referring to FIG. 1, although A-DPHC also includes radio resources (Data 1 and Data 2) for transmitting traffic data, the traffic data has already been transmitted using HS-PDSCH. Hence, the traffic data is not actually mapped to A-DPCH.

However, since a TPC bit (TPC) and a pilot signal (Pilot) need to be transmitted for transmission power control and the like, A-DPCH is used in parallel with HS-PDSCH. Hence, a resource (one code) of A-DPCH is always required although there is no data to be transmitted. This may result in a shortage in resources in an environment in which a plurality of mobile terminals of a plurality of users exist.

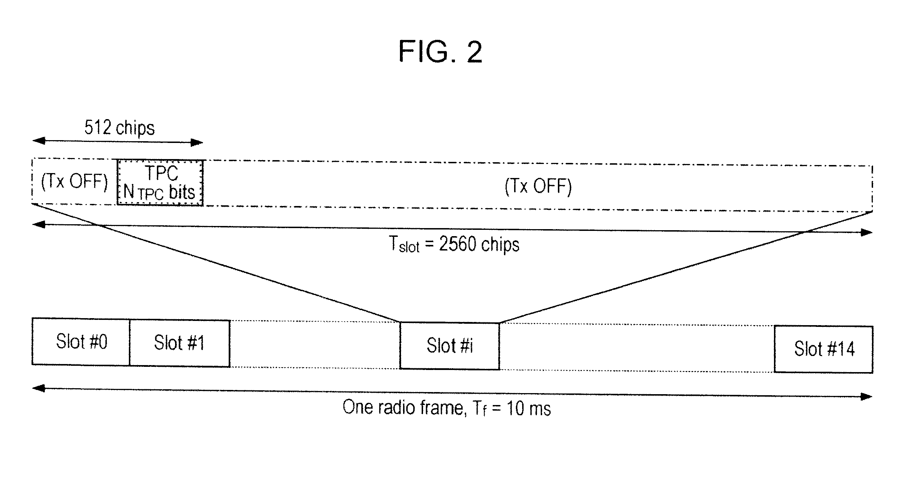

To solve the problem of a shortage in resources in an environment in which a plurality of mobile terminals of a plurality of users exist, Release 6 introduced a Fractional Dedicated Physical Channel (F-DPCH), which transmits transmission power control information for dedicated channels (uplink channels) of a plurality of mobile terminals of a plurality of users in such a manner as to be time-division multiplexed in a single slot. FIG. 2 illustrates the configuration of a downlink F-DPCH frame. F-DPCH transmits only TPC bit information, using only one symbol in a single slot. This provides a capacity ten times that of A-DPCH, and hence, results in a decrease in the amount of resources consumed even in an environment in which a plurality of mobile terminals of a plurality of users exist.

In F-DPCH, notification of TFCI information or a pilot signal is not performed. In the case of A-DPCH, SIR measurement and detection of a synchronous word (SW) are performed using the Pilot field. However, in the case of F-DPCH, SIR measurement is performed using the TPC field, and a TPC error rate is measured instead of detecting an SW. In HSDPA, TFRI of HS-SCCH is used instead of the TFCI information.

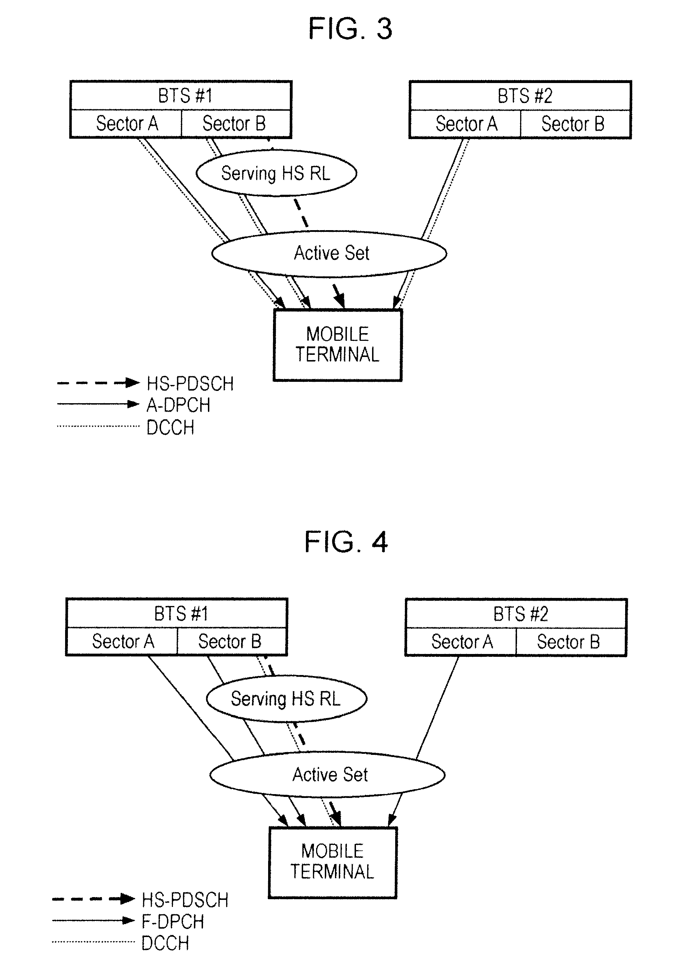

FIG. 3 illustrates transmission of dedicated control channels (DCCHs) in Release 5 (using A-DPCH). FIG. 4 illustrates transmission of dedicated control channels (DCCHs) in Release 6 (using A-DPCH). Referring to FIG. 3, when A-DPCH is used, transmission of the dedicated control channels (DCCHs) (represented by dotted lines) is performed through A-DPCH. However, referring to FIG. 4, when F-DPCH is used, transmission of the dedicated control channels (DCCHs) is performed through a shared physical channel (HS-PDSCH) shared by a plurality of users.

As described above, in HSDPA, A-DPCH has been used until Release 5, but F-DPCH is used in Release 6. In the actual operation of a network, however, it is expected that switching to Release 6 will not be completely performed owing to consideration of radio communication performance and functionality, and Releases 5 and 6 will be used in parallel.

Note that a method of recovery after disconnection which may be generated in HSDPA has been proposed.

The following documents describe related technologies.

Japanese Laid-open Patent Publication No. 2008-503913.

Japanese Laid-open Patent Publication No. 2007-208525.

"3rd Generation Partnership Project; Technical Specification Group Radio Access Network; Physical layer procedures (FDD) (Release 6)", 3GPP TS 25.214 V6.7.1, 2005-12.

### SUMMARY

It is considered desirable to enable reliable transmission of control information even if the channel quality of HS-PDSCH or F-DPCH is reduced.

According to an aspect of the embodiment, a method of radio communication in a radio communication system including a plurality of mobile terminals and a base transceiver station, includes establishing radio communication between a first mobile terminal and the base transceiver station by using a first physical channel and a first dedicated channel, wherein a slot of the first physical channel is shared by time-division multiplexing by first and second control information, the first control information being for the first dedicated channel of the first mobile terminal, the second control information being for a second dedicated channel of a second mobile terminal, and switching the first physical channel to a second physical channel on the basis of a first communication quality of the established radio communication, wherein a slot of the second physical channel is dedicated to the first control information.

### BRIEF DESCRIPTION OF DRAWINGS

FIG. 1 illustrates a configuration of a downlink A-DPCH frame;

FIG. 2 illustrates a configuration of a downlink F-DPCH frame;

FIG. 3 is an illustration for explaining A-DPCH in a state of HSDPA connection;

FIG. 4 is an illustration for explaining F-DPCH in a state of HSDPA connection;

FIG. 5 is a block diagram illustrating a radio communication system in a state of HSDPA connection;

FIG. 6 is a block diagram of a configuration of a mobile terminal;

FIG. 7 is a flowchart of a radio communication method according to an embodiment;

FIG. 8 is a sequence diagram of a radio communication method according to a first embodiment;

FIG. 9 is a sequence diagram of a radio communication method according to a second embodiment; and

FIG. 10 is a sequence diagram of a radio communication method according to a third embodiment.

### DESCRIPTION OF EMBODIMENTS

HS-PDSCH, through which dedicated control channels (DCCHs) are transmitted when Release 6 of HSDPA is applied and F-DPCH is used, does not use soft handover. Hence, the reliability of connection is lower than that of A-DPCH which uses soft handover. In particular, when a mobile terminal is moving at high speed, the state of the HS-PDSCH channel severely changes, possibly resulting in disconnection of communication.

In addition, although the same slot of F-DPCH is shared by dedicated channels of a plurality of mobile terminals, transmission power control of F-DPCH is performed only in a slot basis. Hence, a flexibility of a reception power of F-DPCH is lower than that of A-DPCH which is a physical channel dedicated to each dedicated channel of each mobile terminal, and thereby the reliability of connection of F-DPCH is lower than that of A-DPCH.

Hereinafter, preferred embodiments will be explained with reference to accompanying drawings..

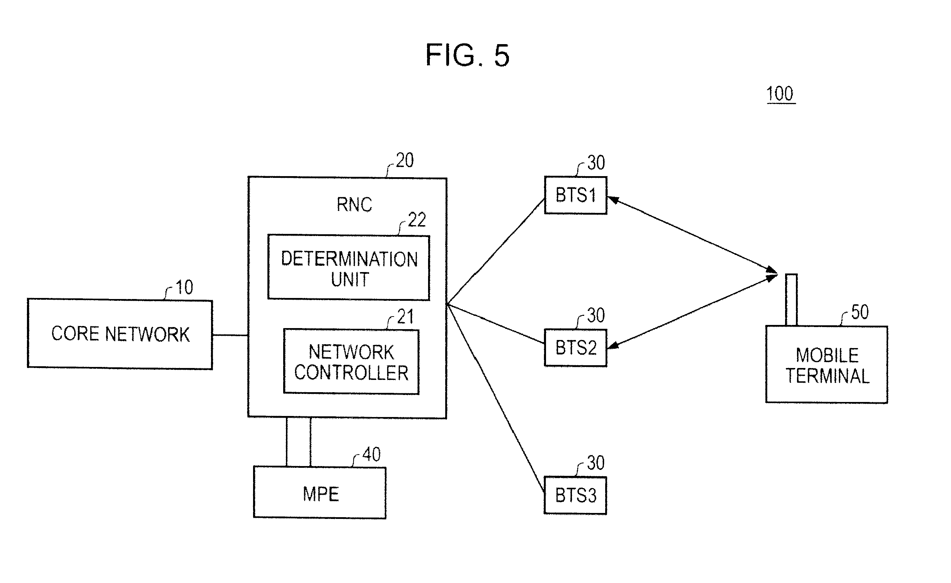

FIG. 5 is a block diagram illustrating a radio communication system 100 in a state of HSDPA connection. The radio communication system 100 includes a core network (CN) 10, a radio network controller (RNC) 20, a base transceiver station (BTS) 30, multimedia signal processing equipment (MPE) 40, a mobile terminal (also called user equipment (UE)) 50. The core network 10, the radio network controller 20, the base transceiver station 30, and the multimedia signal processing equipment 40 form a radio access network that the mobile terminal 50 accesses.

The radio network controller 20 has a control signal processing function, a maintenance and operation function, a common channel multiplexing/demultiplexing function, an ATM switching function, a diversity handover function, and the like. The radio network controller 20 is connected to the core network 10 and performs channel connection control of radio channels, handover control, and the like.

In the base transceiver station 30, a transmission signal received from the radio network controller 20 is coded, modulated, and after power amplification, transmitted to the mobile terminal 50. A signal received from the mobile terminal 50 is, after power amplification, demodulated, decoded, and transmitted to the radio network controller 20.

The multimedia signal processing equipment 40, which is connected to the radio network controller 20, has a packet signal processing function, such as a protocol conversion function for packet-switched data, an audio signal processing function, such as conversion from Adaptive Multi-Rate coding to µ-law pulse code modulation or conversion opposite to this for audio data, and the like.

The radio network controller 20 includes a network controller 21 and a determination unit 22. The determination unit 22 receives a report of a signal quality such as a TPC error rate and the like from the mobile terminal 50 and determines the signal quality on the basis of the report. The network controller 21 switches physical layer control from F-DPCH to A-DPCH and thereby performs handover and the like on the basis of the determination result by the determination unit 22, for the mobile terminal 50 in a state of HSDPA connection using F-DPCH.

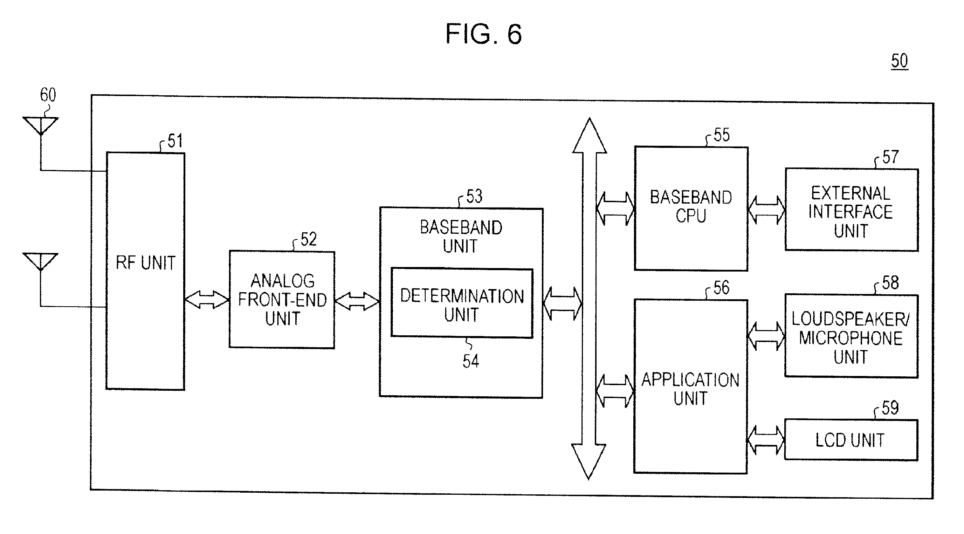

FIG. 6 is a block diagram of a configuration of the mobile terminal 50. The mobile terminal 50 includes an RF unit 51, an analog front-end unit 52, a baseband unit 53, a baseband CPU 55, an application unit 56, an external interface unit 57, a loudspeaker/microphone unit 58, and an LCD unit 59. The RF unit 51, the analog front-end unit 52, the baseband unit 53, and the baseband CPU 55 constitutes a communication unit in the mobile terminal 50. The mobile terminal 50 performs a radio communication with the base transceiver station 30 by using the communication unit and establishes the HSDPA connection by using F-DPCH.

The RF unit 51 amplifies a transmission signal supplied from the analog front-end unit 52 and outputs the signal from an antenna 60. The RF unit 51 amplifies a received signal supplied from the antenna 60 and sends the signal to the analog front-end unit 52. Between the RF unit 51 and the baseband unit 53, a baseband signal is coded, modulated and converted to a transmission signal, and a received signal is demodulated, decoded and converted to a baseband signal, by the analog front-end unit 52.

The baseband unit 53 is a hardware unit in charge of signal processing in the baseband, and includes a determination unit 54. The determination unit 54 computes a TPC error rate from, for example, an SIR measurement result for an in-synchronization determination threshold Qin or an out-of-synchronization determination threshold Qout, and provides the result to the baseband CPU 55 connected thereto via a bus. The baseband CPU 55 reports the TPC error rate obtained by the determination unit 54 to the radio access network periodically. The external interface unit 57 is connected to the baseband CPU 55, and plays the role of interfaces with an external memory and the like.

The application unit 56 is connected to the baseband unit 53 and the baseband CPU 55 via the bus, and executes the applications of the mobile terminal 50. The loudspeaker/microphone unit 58, which allows a user to perform voice communication, and the LCD unit 59, which displays various kinds of information for the user, are connected to the application unit 56.

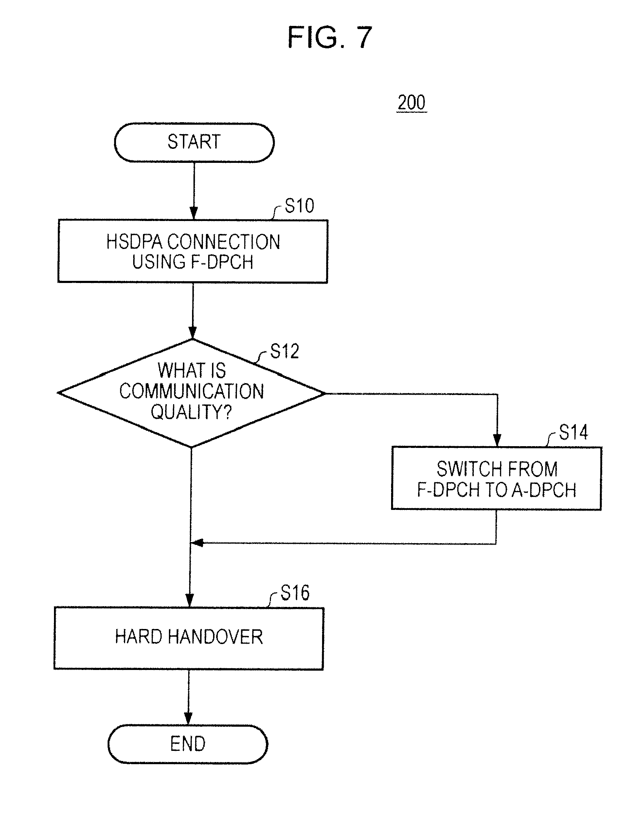

FIG. 7 is a flowchart of a radio communication method 200 according to an embodiment. In the following descriptions, in case there are no specific explanations, operations of the mobile terminals 50 are performed under control of the baseband CPU 55. In the radio communication method 200, an HSDPA connection is established between a mobile terminal and the radio access network (for example, a radio network controller via a base transceiver station) using F-DPCH (step S10). The mobile terminal or the radio access network checks the communication quality of the established radio communication (step S12), and in accordance with the communication quality, switches the physical channel (DPCH) from F-DPCH to A-DPCH (step S14). Then, hard handing over is performed for the mobile terminal (step S16). Alternatively, soft handing over may be performed in case the step S16 is performed after the step 14.

The communication quality used to determine switching of the physical channel may be measured and reported to the radio access network by the mobile terminal periodically or only when the switching of the physical channel is required.

The communication quality may be a TPC error rate computed from the SIR measurement result for the in-synchronization determination threshold Qin or the out-of-synchronization determination threshold Qout in the mobile terminal 50, or may be an error rate and a flow amount based on CQI of a common pilot channel (CPICH) and throughput measured by the radio access network.

Hereinafter, preferred embodiments of the radio communication method 200 are described.

First embodiment

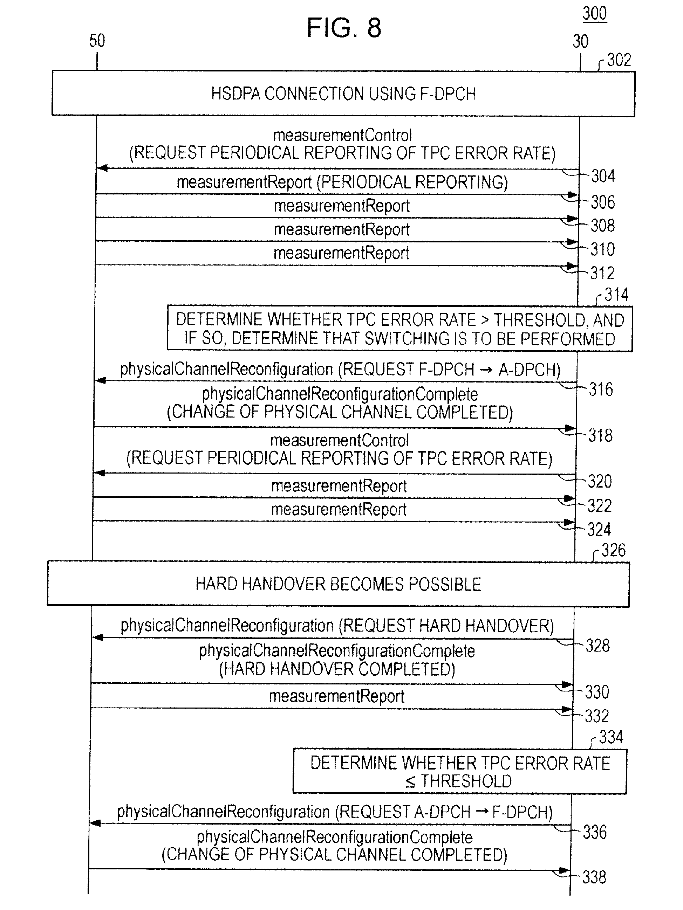

FIG. 8 is a sequence diagram of a radio communication method 300 according to a first embodiment. In the following descriptions, in case there are no specific explanations, operations of the mobile terminals 50 are performed under control of the baseband CPU 55. In the radio communication method 300, the base transceiver station 30 establishes an HSDPA connection with the mobile terminal 50 supporting HSDPA Release 6, using F-DPCH (step 302).

In an HSDPA connection state, the base transceiver station 30 transmits a "measurementControl" message to the mobile terminal 50, and requests periodical reporting of the TPC error rate computed from the SIR measurement result for the in-synchronization determination threshold Qin or the out-of-synchronization determination threshold Qout SIR (step 304). In response to this request, the mobile terminal 50 performs periodical reporting using a "measurementReport" message (steps 306 to 312).

When a value (TPC error rate) reported from the mobile terminal 50 exceeds a determination threshold, the base transceiver station 30 determines that switching of the physical channel is to be performed (step 314) and transmits a "physicalChannelReconfiguration" message to the mobile terminal 50, and instructs the mobile terminal 50 to change the physical channel (DPCH) from F-DPCH to A-DPCH (step 316). The mobile terminal 50 reports that the physical channel has been changed from F-DPCH to A-DPCH using a "physicalChannelReconfiguratianCamplete" message (step 318). Since DCCH including TPC bit information is transmitted by using A-DPCH which is a dedicated physical channel and transmission power of which can be controlled separately, a flexibility of a reception power of A-DPCH is higher than that of F-DPCH. Therefore, the reception rate of DCCH when the physical channel is A-DPCH is better than that when the physical channel is HS-PDSCH, and the reception rate of TPC bit information when the physical channel is A-DPCH is better than that when the physical channel is F-PDCH. Hence, the mobile terminal 50, having changed the physical channel to A-DPCH, can perform hard handover while maintaining the HSDPA state.

The base transceiver station 30, by transmitting a "measurementControl" message to the mobile terminal 50, requests periodical reporting of the TPC error rate to determine whether or not to return from A-DPCH to F-DPCH (step 320). In response to this request, the mobile terminal 50 performs periodical reporting (steps 322-324).

When handover becomes possible (step 326), the base transceiver station 30 transmits a "physicalChannelRecongfiguration" message to the mobile terminal 50 and requests handover (step 328). The mobile terminal 50, when the requested handover is completed, reports this fact by sending a "physicalChannelReconfigurationComplete" message to the base transceiver station 30 (step 330). The mobile terminal 50 performs periodical reporting of the TPC error rate using a "measurementReport" message (step 332).

The base transceiver station 30, when it is determined that the reported TPC error rate is equal to or below the determination threshold and the mobile terminal 50 has a sufficient reception level (step 334), transmits a "physicalChannelReconfiguration" message again and instructs the mobile terminal 50 to change the physical channel from A-DPCH to F-DPCH (step 336). The mobile terminal 50 reports completion of changing A-DPCH to F-DPCH using a "physicalChannelReconfigurationComplete" message (step 338).

Second embodiment

In the first embodiment, the mobile terminal 50 reports the TPC error rate to the base transceiver station 30, and the base transceiver station 30 compares the TPC error rate with a threshold. In a second embodiment, the mobile terminal 50 compares the TPC error rate with a threshold, and when the TPC error rate exceeds the threshold, reports this fact to the base transceiver station 30.

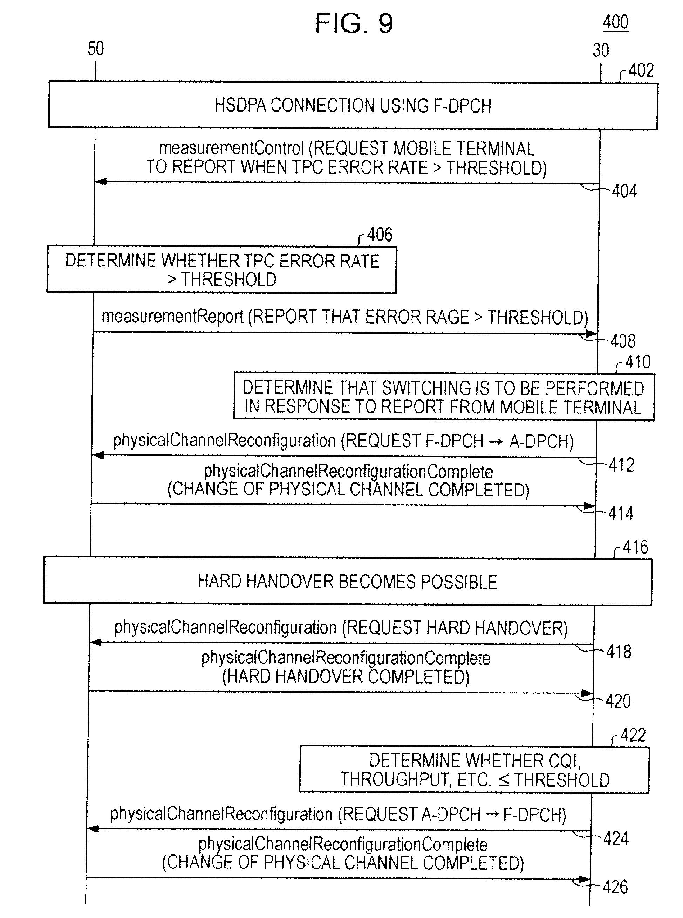

FIG. 9 is a sequence diagram of a radio communication method 400 according to the second embodiment. In the following descriptions, in case there are no specific explanations, operations of the mobile terminals 50 are performed under control of the baseband CPU 55. In the radio communication method 400, the base transceiver station 30 establishes an HSDPA connection with the mobile terminal 50 supporting HSDPA Release 6, using F-DPCH (step 402).

In an HSDPA connection state, the base transceiver station 30 transmits a "measurementControl" message to the mobile terminal 50, and requests the mobile terminal 50 to report when the TPC error rate computed from the SIR measurement result for the in-synchronization determination threshold Qin or the out-of-synchronization determination threshold Qout has exceeded a predetermined determination threshold (step 404). In response to this request, when it is determined that the TPC error rate has exceeded the predetermined determination threshold (step 406), the mobile terminal 50 reports the comparison result (that the TPC error rate has exceeded the predetermined threshold) using a "physicalChannelReconfigurationComplete" message (step 408).

When having received, from the mobile terminal 50, the comparison result that the TPC error rate has exceeded the predetermined threshold, the base transceiver station 30 determines that switching of the physical channel is to be performed (step 410) and transmits a "physicalChannelReconfiguration" message to the mobile terminal 50, thereby instructing the mobile terminal 50 to change the physical channel (DPCH) from F-DPCH to A-DPCH (step 412). The mobile terminal 50 reports that the physical channel has been changed from F-DPCH to A-DPCH using a "physicalChannelReconfigurationComplete" message (step 414). Since DCCH including TPC bit information is transmitted by using A-DPCH which is a dedicated physical channel and transmission power of which can be controlled separately, a flexibility of a reception power of A-DPCH is higher than that of F-DPCH. Therefore, the reception rate of DCCH when the physical channel is A-DPCH is better than that when the physical channel is HS-PDSCH, and the reception rate of TPC bit information when the physical channel is A-DPCH is better than that when the physical channel is F-PDCH. Hence, the mobile terminal 50, having changed the physical channel to A-DPCH, can perform hard handover while maintaining the HSDPA state.

When handover becomes possible (step 416), the base transceiver station 30 transmits a "physicalChannelRecongfiguration" message to the mobile terminal 50 and requests handover (step 418). The mobile terminal 50, when the requested handover is completed, reports this fact by transmitting a "physicalChannelReconfigurationComplete" message to the base transceiver station 30 (step 420).

The base transceiver station 30, in a state of A-DPCH, monitors an error rate and a flow amount based on CQI of the common pilot channel (CPICH) and throughput, and when it is determined that the reception level of the mobile terminal 50 is sufficiently high (step 422), transmits a "physicalChannelReconfiguration" message again and instructs the mobile terminal 50 to change the physical channel from A-DPCH to F-DPCH (step 424). The mobile terminal 50 reports completion of changing A-DPCH to F-DPCH using a "physicalChannelReconfigurationComplete" message (step 426).

Third embodiment

In the first and second embodiments, switching of the DPCH physical channel is determined on the basis of the TPC error rate. In a third embodiment, switching of the physical channel (DPCH) is determined on the basis of CQI, throughput, and the like.

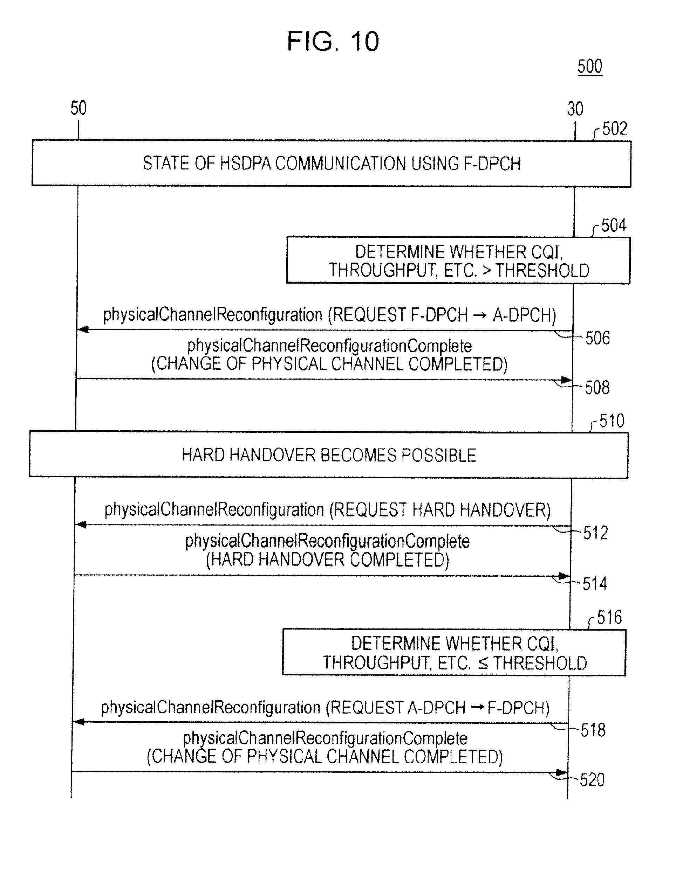

FIG. 10 is a sequence diagram of a radio communication method 500 according to the third embodiment. In the following descriptions, in case there are no specific explanations, operations of the mobile terminals 50 are performed under control of the baseband CPU 55. In the radio communication method 50, the base transceiver station 30 establishes an HSDPA connection with the mobile terminal 50 supporting HSDPA Release 6, using F-DPCH (step 502).

In an HSDPA connection state, the base transceiver station 30 monitors an error rate and a flow amount based on CQI of the common pilot channel (CPICH) and throughput, and it is determined whether or not a determination threshold has been exceeded (step 504). When the determination threshold has been exceeded, the base transceiver station 30 determines that switching of the physical channel is to be performed and transmits a "physicalChannelReconfiguration" message to the mobile terminal 50, thereby instructing the mobile terminal 50 to change the physical channel (DPCH) from F-DPCH to A-DPCH (step 506). The mobile terminal 50 reports that the physical channel has been changed from F-DPCH to A-DPCH using a "physicalChannelReconfigurationComplete" message (step 508). Since DCCH including TPC bit information is transmitted by using A-DPCH which is a dedicated physical channel and transmission power of which can be controlled separately, a flexibility of a reception power of A-DPCH is higher than that of F-DPCH. Therefore, the reception rate of DCCH when the physical channel is A-DPCH is better than that when the physical channel is HS-PDSCH, and the reception rate of TPC bit information when the physical channel is A-DPCH is better than that when the physical channel is F-PDCH. Hence, the mobile terminal 50, having changed the physical channel to A-DPCH, can perform hard handover while maintaining the HSDPA state.

When handover becomes possible (step 510), the base transceiver station 30 transmits a "physicalChannelRecongfiguration" message to the mobile terminal 50 and requests handover (step 512). The mobile terminal 50, when the requested handover is completed, reports this fact by transmitting a "physicalChannelReconfigurationComplete" message to the base transceiver station 30 (step 514).

The base transceiver station 30, in a state of A-DPCH, monitors the error rate and the flow amount on the basis of CQI of the common pilot channel (CPICH) and throughput, and when it is determined that the reception level of the mobile terminal 50 is sufficiently high (step 516), transmits a "physicalChannelReconfiguration" message again and instructs the mobile terminal 50 to change the physical channel from A-DPCH to F-DPCH (step 518). The mobile terminal 50 reports completion of changing A-DPCH to F-DPCH using a "physicalChannelReconfigurationComplete" message (step 520).

According to the embodiments described above, even when the channel quality of HS-PDSCH or F-DPCH is reduced, control information can be more reliably transmitted, allowing HSDPA connection to be maintained, whereby user throughput is improved.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention has(have) been described in detail, it should be understood that the various changes, substitutions, and alterations could be made hereto without departing from the spirit and scope of the invention.

## Claims

1. A method of radio communication in a radio communication system including a plurality of mobile terminals and a base transceiver station, the method comprising:
establishing radio communication between a first mobile terminal and the base transceiver station by using a first physical channel and a first dedicated channel, wherein a slot of the first physical channel is shared by time-division multiplexing by first and second control information, the first control information being for the first dedicated channel of the first mobile terminal, the second control information being for a second dedicated channel of a second mobile terminal; and
switching the first physical channel to a second physical channel on the basis of a first communication quality of the established radio communication, wherein a slot of the second physical channel is dedicated to the first control information.

2. The method according to claim 1, wherein the first and second control information is transmission power control information.

3. The method according to claim 2, wherein a single slot of the first physical channel is shared by a plurality of pieces of the transmission power control information for a plurality of dedicated channels including the first and second dedicated channels, and a single slot of the second physical channel is dedicated only to a single piece of the transmission power control information for the first dedicated channel.

4. The method according to any preceding claim, wherein the first communication quality is a transmission power control error rate that is computed from a signal-to-interference ratio measurement of transmission power control information.

5. The method according to claim 4, wherein the switching the first physical channel to the second physical channel is performed when the transmission power control error rate exceeds a first predetermined threshold.

6. The method according to claim 5, further comprising:
switching the second physical channel to the first physical channel when the transmission power control error rate is below a second predetermined threshold.

7. The method according to any preceding claim, wherein the radio communication is established by highspeed downlink packet access of code division multiple access, the first physical channel is a fractional-dedicated physical channel in the highspeed downlink packet access, and the second physical channel is an associated-dedicated physical channel in the highspeed downlink packet access.

8. The method according to any preceding claim, wherein the establishing radio communication is performed by the first mobile terminal and the base transceiver, and the switching the first physical channel to the second physical channel is performed by the first mobile terminal on the basis of an instruction from the base transceiver station.

9. The method according to any preceding claim, wherein the first dedicated channel is a first uplink channel from the first mobile terminal to the base transceiver station, and the first control information is transmission power control information for controlling transmission power of the first uplink channel,
wherein the second dedicated channel is a second uplink channel from the second mobile terminal to the base transceiver station, and the second control information is transmission power control information for controlling transmission power of the second uplink channel.

10. The method according to any preceding claim, further comprising:
performing a hard handing over from the base transceiver station to the other base transceiver station.

11. A radio network control apparatus for controlling radio communication with a plurality of mobile terminals, the radio network control apparatus comprising:
a communication unit that establishes radio communication with a first mobile terminal by using a first physical channel and a first dedicated channel, wherein a slot of the first physical channel is shared by time-division multiplexing by first and second control information, the first control information being for the first dedicated channel of the first mobile terminal, the second control information being for a second dedicated channel of a second mobile terminal;
a determination unit that determines a first communication quality of the established radio communication; and
a network control unit that instructs the first mobile terminal to switch the first physical channel to a second physical channel on the basis of the determined communication quality, wherein a slot of the second physical channel is dedicated to the first control information.

12. The radio network control apparatus according to claim 11, wherein the first and second control information is transmission power control information,
wherein the first communication quality is a transmission power control error rate that is computed from a signal-to-interference ratio measurement of transmission power control information.

13. A mobile terminal comprising:
a communication unit that establishes radio communication with a base transceiver station by using a first physical channel and a fist dedicated channel, wherein a slot of the first physical channel is shared by time-division multiplexing by first and second control information, the first control information being for the first dedicated channel of the mobile terminal, the second control information being for a second dedicated channel of the other mobile terminal;
a determination unit that determines a first communication quality of the established radio communication; and
a control unit that reports the determined communication quality to the base transceiver station and switches the first physical channel to a second physical channel on the basis of an instruction from the base transceiver station, wherein a slot of the second physical channel is dedicated to the first control information.

14. The mobile terminal according to claim 13, wherein the first and second control information is transmission power control information,
wherein the first communication quality is a transmission power control error rate that is computed from a signal-to-interference ratio measurement of transmission power control information.
